# FASCICULE DE BREVET EUROPEEN

(11) **EP 3 850 193 B1**
(45) Date de publication et mention de la délivrance du brevet: **25.10.2023**
(21) Numéro de dépôt: 19790650.6
(22) Date de dépôt: 16.09.2019
(51) Int. Cl.: F01D 19/00, F01D 25/18, F01M 11/00

(54) **PROCÉDÉ DE SURVEILLANCE DE L'ÉTAT DE FONCTIONNEMENT D'UNE VANNE DE SUPRESSION**
VERFAHREN ZUR ÜBERWACHUNG DES BETRIEBSZUSTANDS EINES ÜBERDRUCKVENTILS
METHOD FOR MONITORING THE OPERATING STATE OF AN OVERPRESSURE VALVE

(30) Priorité: 14.09.2018 FR 1858308
(43) Date de publication de la demande: 21.07.2021
(73) Titulaire: SAFRAN AIRCRAFT ENGINES, 75015 Paris (FR)
(72) Inventeur: DENEUVE, Sébastien Jean Fernand, 77550 MOISSY-CRAMAYEL (FR)
(74) Mandataire: Regimbeau
(86) Numéro de dépôt international: PCT/FR2019/052154
(87) Numéro de publication internationale: WO 2020/053536

(56) Documents cités:
- FR-A1- 2 978 211
- FR-A1- 2 980 237
- FR-A1- 2 987 398

## Description

### DOMAINE DE L'INVENTION

L'invention concerne un procédé de surveillance de l'état de fonctionnement d'une vanne de surpression.

Ce procédé est en particulier destiné à être mis en oeuvre pour une vanne de surpression de turbomachine, ladite vanne étant configurée pour limiter les pressions d'huile maximales dans un circuit d'huile de la turbomachine.

### ETAT DE LA TECHNIQUE

Une turbomachine pour un aéronef comprend généralement, d'amont en aval dans le sens de l'écoulement des gaz, une soufflante, un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz.

A chaque compresseur peut correspondre une turbine, les deux étant reliés par un arbre, formant ainsi, par exemple, un corps haute pression et un corps basse pression. Elle présente généralement, d'une part, sensiblement au niveau de l'extrémité amont du corps haute pression, une "enceinte amont" et d'autre part, sensiblement au niveau de l'extrémité aval du corps haute pression, une "enceinte aval", ces deux enceintes contenant des organes de type roulements et engrenages entraînés par un des arbres des corps haute ou basse pression.

Ces enceintes sont baignées dans une atmosphère contenant de l'huile pour la lubrification de ces différents organes. Ces enceintes ainsi que des boites d'accessoires du moteur sont alimentées en huile de lubrification par un circuit qui comporte un réservoir duquel partent des canalisations qui le relient aux différents organes à lubrifier.

Une pompe d'alimentation assure la mise en mouvement de l'huile vers ces organes et des canalisations récupèrent l'huile à leur sortie pour la ramener vers le réservoir. La pression d'huile dans le circuit résulte de la pression donnée au refoulement de la pompe d'alimentation, qui est liée au régime moteur, et de la taille des gicleurs qui sont situés en sortie des canalisations d'alimentation des enceintes.

Après son passage dans les enceintes, l'huile est dirigée vers un groupe d'échangeurs huile-carburant pour être refroidie avant de retourner au réservoir.

Le système huile d'un turboréacteur comporte de nombreux actionneurs et capteurs pour permettre d'assurer les deux fonctions principales de ce système : lubrifier le moteur et maintenir la température de l'huile à un niveau acceptable.

Afin de protéger les éléments du circuit d'huile des pressions d'huile maximales, une vanne de surpression PRV (Pressure Relief Valve) est présente dans le circuit. Cette vanne n'est donc censée s'ouvrir qu'à deux moments (qui correspondent aux deux cas où une surpression dans le circuit peut se produire) :
- en cas de défaillance dans le circuit d'huile ;
- en cas de démarrage avec une huile très froide.

Ainsi cette vanne de surpression s'ouvre afin de limiter les pressions d'huile maximales dans le circuit pour protéger les autres équipements du circuit en cas de forte pression. Une défaillance de cette vanne de surpression rend inopérante la fonction de protection contre les surpressions ce qui, de fait, peut conduire à une panne moteur conduisant à annulation de vol si une surpression a lieu au sol, ou à un arrêt non sollicité du moteur si une surpression a lieu en vol.

Il est connu une stratégie de surveillance acoustique de la vanne de surpression grâce à l'acquisition de la température d'huile en entrée et en sortie de la vanne de surpression et d'une mesure ultrasonique de l'écoulement en sortie de la vanne de surpression. Une fuite est alors détectée si une variation anormale de la température est relevée par rapport à l'élévation de la température ambiante. Cette fuite est confirmée si la mesure ultrasonique dépasse un certain seuil.

Il est également connu une méthode de surveillance d'un système hydraulique utilisant pour cela un modèle physique complet basé sur les équations physiques régissant le système. Ce modèle utilise des acquisitions liées aux différentes géométries variables (pression d'actionnement, courant de commande, ...) pour déterminer l'état complet du système.

Ces solutions imposent la mise en place de moyens d'acquisition supplémentaires, imposant des contraintes additionnelles sur l'installation de capteurs notamment à proximité de la vanne.

En outre, ces solutions entrainent l'installation de harnais spécifiques pour les connexions électriques. Ces solutions ont donc pour conséquence un bilan masse/coût/installation défavorable.

Le document EP297821 1 A1 divulgue un procédé de détection d'une panne d'un clapet de surpression d'un circuit d'injection de carburant dans une turbomachine.

### PRESENTATION DE L'INVENTION

L'invention a pour but de proposer un procédé de surveillance de l'état de fonctionnement d'une vanne de surpression permettant de pallier les inconvénients précédemment décrits.

Le but est atteint dans le cadre de la présente invention grâce à un procédé de surveillance de l'état de fonctionnement d'une vanne de surpression de turbomachine, la turbomachine comprenant un circuit de fluide, au moins un capteur de pression du fluide dans le circuit de fluide, un capteur de température du fluide dans le circuit de fluide, ladite vanne de surpression étant configurée pour limiter les pressions de fluide maximales dans le circuit de fluide et s'ouvrir si la température du fluide est inférieure à une température seuil de fluide, et le procédé comprenant les étapes suivantes :
- détermination d'un indicateur d'ouverture ou de fermeture de la vanne de surpression à partir de l'évolution temporelle de la pression de fluide ;
- détermination d'un état de fonctionnement de la vanne en fonction d'une température de fluide mesurée par le capteur de fluide, d'une température seuil de fluide et de l'indicateur d'ouverture ou de fermeture de la vanne de surpression déterminé.

Avantageusement, ledit procédé permet d'obtenir un indicateur de l'état de fonctionnement de la vanne sans avoir besoin de monter un capteur signalant l'état ouvert ou fermé de la vanne de surpression permettant un gain de poids et minimisant le nombre de connecteurs au niveau d'un calculateur de la turbomachine.

Également, ledit procédé permet ainsi de mettre en oeuvre une manière robuste de détecter les variations de comportement de cette vanne de surpression, et ainsi éviter de fausses détections.

Avantageusement, mais facultativement, le procédé selon l'invention peut en outre comprendre au moins l'une des caractéristiques suivantes :
- l'étape de détermination d'un indicateur d'ouverture ou de fermeture de la vanne de surpression est effectuée en fonction de la dérivée ou de la dérivée seconde de la pression de fluide en fonction du temps ;
- l'étape de détermination d'un indicateur d'ouverture ou de fermeture de la vanne de surpression comporte également, quand ladite étape est effectuée en fonction de la dérivée de la pression de fluide en fonction du temps, la :
   ∘ détermination d'un indicateur d'ouverture de la vanne de surpression si une valeur de la dérivée est inférieure à une première valeur seuil, et la
   ∘ détermination d'un indicateur de fermeture la vanne de surpression si une valeur de la dérivée est supérieure à une seconde valeur seuil ;
- l'étape de détermination d'un indicateur d'ouverture ou de fermeture de la vanne de surpression comporte également, quand ladite étape est effectuée en fonction de la dérivée seconde de la pression de fluide en fonction du temps, la :
   ∘ détermination d'un indicateur d'ouverture de la vanne de surpression si une valeur de la dérivée seconde est inférieure à une première valeur seuil, et supérieure à une seconde valeur seuil, supérieure à la première valeur, et la
   ∘ détermination d'un indicateur de fermeture de la vanne de surpression si une valeur de la dérivée seconde est inférieure à la première valeur seuil, et supérieure à une seconde valeur seuil ;
- le circuit de fluide est un circuit d'huile et la vanne de surpression est configurée pour limiter les pressions d'huile maximales dans le circuit d'huile de la turbomachine ;
- l'étape de détermination d'un état de fonctionnement de la vanne de surpression comporte également les sous-étapes suivantes :
   ∘ détermination d'un état de fonctionnement anormal de la vanne de surpression si un indicateur d'ouverture a été déterminé et si la température du fluide à un instant correspondant à l'indicateur d'ouverture est supérieure à un seuil de température déterminé ;
- la turbomachine comprend un capteur de vitesse de régime moteur, et dans lequel le procédé comprend en outre une étape initiale d'extraction d'une phase de démarrage du moteur en fonction du régime moteur, l'étape de détermination d'un indicateur d'ouverture ou de fermeture de la vanne de surpression étant mise en oeuvre durant ladite phase de démarrage moteur ;
- l'étape de détermination d'un état de fonctionnement de la vanne de surpression comporte également les sous-étapes suivantes :
   ∘ détermination d'un état de fonctionnement anormal de la vanne de surpression si durant la phase de démarrage, la température est supérieure à un seuil de température déterminé ;
- l'étape de détermination d'un état de fonctionnement de la vanne de surpression comporte également les sous-étapes suivantes :
   ∘ détection d'une dérive d'une ouverture de la vanne de surpression en fonction du régime moteur et température à l'instant d'ouverture, ladite dérive étant représentative de prémices de panne de ladite vanne ;
- l'étape de détection d'une dérive est effectuée, en référence à une courbe nominale fonction du régime moteur et de la température à des instants d'ouverture de la vanne de surpression ; et
- le nombre de cycles d'ouverture et de fermeture de la vanne de surpression est sauvegardé.

L'invention a également pour objet un produit programme d'ordinateur comprenant des instructions de code pour l'exécution d'un procédé de surveillance de l'état de fonctionnement d'une vanne de surpression de turbomachine selon l'une des caractéristiques précédemment décrites.

### DESCRIPTION DES FIGURES

D'autres caractéristiques, buts et avantages de la présente invention apparaîtront à la lecture de la description détaillée qui va suivre, au regard des figures annexées, données à titre d'exemples non limitatifs et sur lesquelles :
- la figure 1 représente de manière schématique un procédé de surveillance de l'état de fonctionnement d'une vanne de surpression selon un mode de réalisation de l'invention ;
- la figure 2A représente une courbe d'évolution de la pression d'huile au cours d'un démarrage froid mis en oeuvre par un module de surveillance selon l'invention ;
- la figure 2B représente une courbe d'évolution de la dérivée la pression d'huile au cours d'un démarrage froid mis en oeuvre par un module de surveillance selon l'invention ;
- la figure 2C représente une courbe d'évolution de la dérivée de la pression d'huile au cours d'un démarrage froid mis en oeuvre par un module de surveillance selon l'invention;
- La figure 3 représente une courbe illustrant l'ouverture de la vanne de surpression en fonction d'un régime moteur et d'une température d'huile mis en oeuvre par un module de surveillance selon l'invention ;

### DESCRIPTION DETAILLEE D'AU MOINS UN MODE DE REALISATION DE L'INVENTION

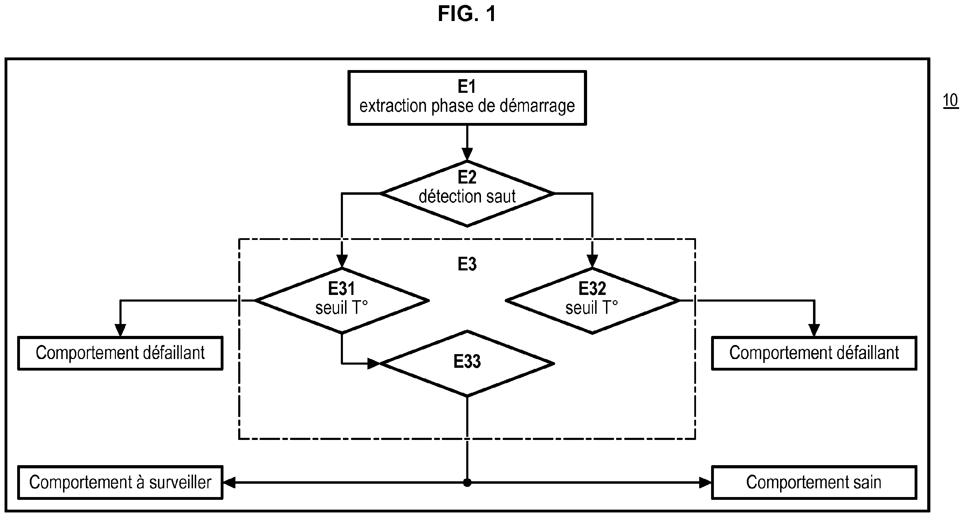

En référence à la **figure 1**, il est décrit un procédé de surveillance de l'état de fonctionnement d'une vanne de surpression mis en oeuvre par un module de surveillance 10.

Avantageusement, l'aéronef comprend un calculateur et le module de surveillance 10 peut être mis en oeuvre par ledit calculateur. Un calculateur comprend, de manière connue, des moyens informatiques configurés pour traiter des données et mettre en oeuvre des programmes d'ordinateur. Le calculateur peut être, par exemple, le calculateur moteur de l'avion qui est utilisé pour gérer des informations sur le fonctionnement du ou des moteurs de l'aéronef.

En particulier, le module de surveillance 10 peut être apte à convertir une mesure analogique de température ou de pression reçue en une valeur digitale utilisable, par exemple, par un processeur ou par un Field-Programmable Gate Array (FPGA).

Dans le contexte où la vanne de surpression est mise en oeuvre dans un circuit d'huile d'un moteur de l'aéronef, le module de surveillance 10 est ainsi configuré pour acquérir des mesures de température d'huile du circuit, de pression d'huile du circuit, ainsi que de régime du moteur, par exemple du corps haute pression (HP) dudit moteur.

Avantageusement, les capteurs permettant l'acquisition de telles mesures sont des capteurs usuellement disponibles dans le moteur d'aéronef.

Comme décrit ci-dessus, la vanne de surpression est censée s'ouvrir en cas de démarrage avec une huile très froide afin de limiter les pressions d'huile maximales dans le circuit pour protéger les autres équipements du circuit en cas de forte pression.

Ainsi, dans une étape **E1** du procédé, le module 10 de surveillance procède à l'extraction de la phase de démarrage d'un moteur d'une turbomachine.

Dans ce but, le module 10 de surveillance procède à l'acquisition de données issues des données continues du moteur dans lesquelles sont extraites sur une base temporelle les valeurs de la pression d'huile, de la température d'huile et de la valeur du régime du corps HP.

A partir de ces données, le module 10 de surveillance extrait la phase de démarrage jusqu'à la première accélération. En effet, l'ouverture de la vanne de surpression s'observe avant l'atteinte du ralenti du régime moteur et sa fermeture peut se faire au cours de la première accélération du moteur.

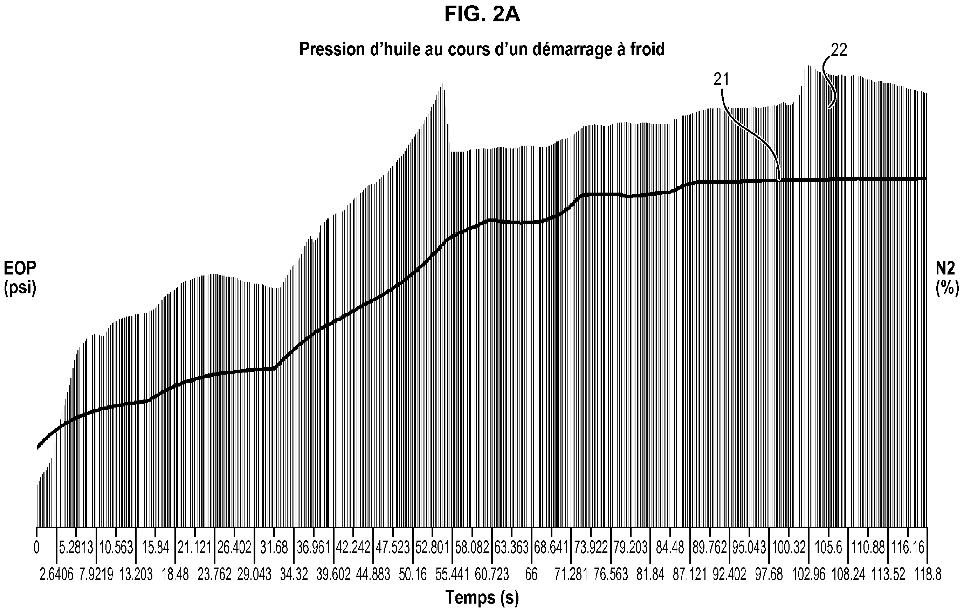

En référence à la **figure 2A****,** il est illustré un graphique représentant l'évolution de la pression d'huile en fonction du temps (référence 22), ainsi que l'évolution du régime moteur en fonction du temps (référence 21).

Le régime moteur peut être utilisé par le module 10 de surveillance pour déterminer un instant de démarrage moteur afin de ne considérer que certains instants pour la détection de l'ouverture/fermeture de la vanne.

Dans une étape E2, le module 10 de surveillance procède à la détection d'un saut de pression d'huile au cours de la phase de démarrage extraite dans l'étape précédente.

En effet, un saut négatif sur la pression d'huile est un indicateur pour détecter l'ouverture de la vanne et un saut positif pour la fermeture. Normalement, l'ouverture conduit à un indicateur plus marqué que la fermeture, il est donc possible de manquer la fermeture malgré la détection d'une ouverture. La détection du saut peut s'effectuer de plusieurs manières.

Ainsi, le module 10 de surveillance peut procéder à la détection d'un saut de pression d'huile en détectant une différence de pression importante durant un laps de temps donné.

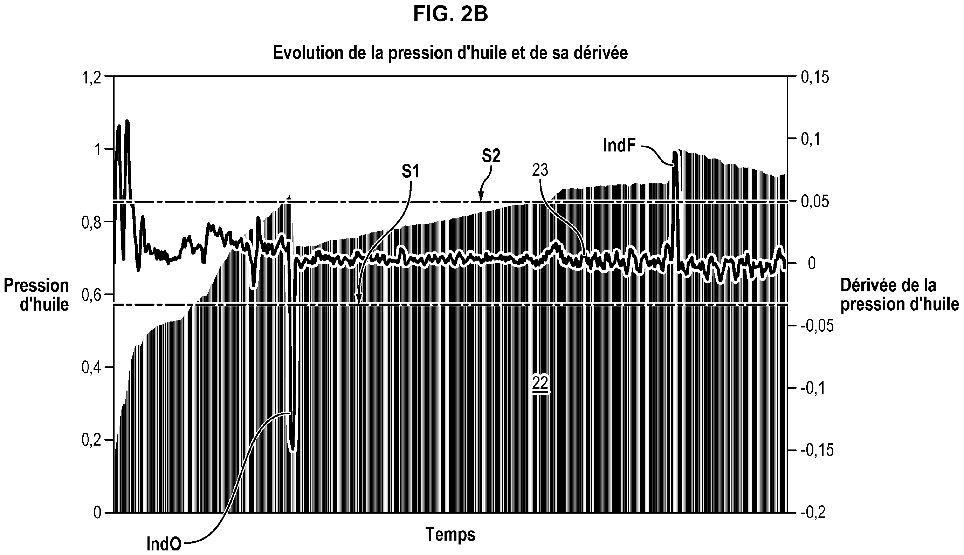

Également, comme illustré en **figure 2B****,** le module 10 de surveillance peut procéder à la détection d'un saut de pression d'huile en déterminant lorsque la dérivée 23 de la pression d'huile dépasse un seuil déterminé.

Ainsi, si un seuil S1 négatif est dépassé par la valeur de la dérivée 23 de la pression d'huile, il s'agit d'une ouverture de la vanne de surpression (référence Ind0).

Si un seuil S2 positif est dépassé par la valeur de la dérivée 23 de la pression d'huile, il s'agit d'une fermeture de la vanne de surpression (référence IndF).

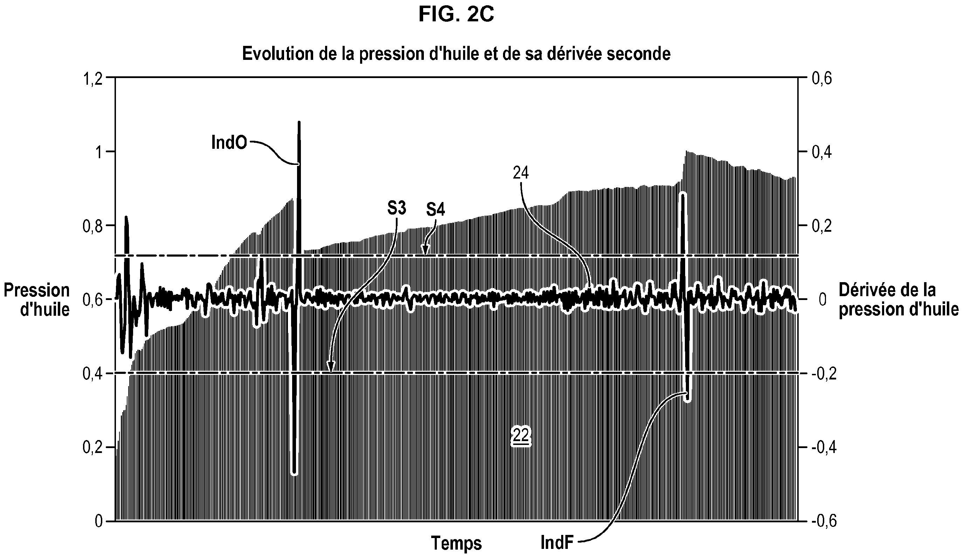

Également, comme illustré en **figure 2C****,** le module 10 de surveillance peut procéder à la détection d'un saut de pression d'huile en déterminant lorsque la dérivée seconde 24 de la pression d'huile dépasse un certain seuil positif S4 et négatif S3.

Si le seuil S3 négatif est dépassé avant le seuil S4 positif, il s'agit d'une ouverture de la vanne de surpression (référence Ind0). Sinon dans le cas inverse il s'agit d'une fermeture de la vanne de surpression (référence IndF).

Le réglage des seuils est effectué au cas par cas en fonction du dimensionnement du circuit d'huile. Il est envisageable que ce seuil évolue en fonction du comportement moteur représenté par l'évolution du régime du corps HP.

Dans une étape **E3,** le module de surveillance 10 procède à la détermination d'un état de fonctionnement de la vanne en fonction d'une température seuil de fluide.

Ainsi, dans une étape **E31,** sous étape de E3, dans le cas où il a été détecté dans l'étape E2 un saut de pression d'huile, le module 10 de surveillance procède à un test sur la température d'huile.

En effet, la vanne de surpression est censée s'ouvrir en cas de démarrage à froid (avec une température d'huile très froide).

Ainsi, si le module 10 de surveillance détecte une ouverture de la vanne de surpression alors que la température d'huile relevée lors de l'ouverture dépasse un seuil de température déterminée (correspondant à une température d'huile froide pour une phase de démarrage) cela traduit une défaillance de l'équipement.

Dans ce cas, le module 10 de surveillance peut signaler une défaillance de la vanne de surpression.

Le réglage de ce seuil sur la température d'huile sera effectué au cas par cas en fonction du dimensionnement du circuit d'huile.

Dans une étape **E32,** sous étape de E3, dans le cas où il n'est pas détecté un saut de pression d'huile dans l'étape E2, le module 10 de surveillance peut également procéder à un test sur la température d'huile.

En effet, la vanne de surpression est censée s'ouvrir en cas de démarrage à froid, ainsi si la température d'huile est en dessous d'un seuil de température déterminée (correspondant à une température d'huile froide pour une phase de démarrage) et que l'on ne détecte pas une ouverture de la vanne de surpression durant la phase de démarrage cela traduit également une défaillance de l'équipement.

Dans ce cas, le module 10 de surveillance peur signaler une défaillance de la vanne de surpression.

Également, le réglage de ce seuil sur la température d'huile peut être effectué au cas par cas en fonction du dimensionnement du circuit d'huile.

Dans une étape **E33** ultérieure, sous étape de E3, dans le cas où la vanne de surpression n'est pas détectée comme défaillante (et ou un évènement ouverture a été détecté), le module 10 de surveillance peut déterminer une dérive du moment d'ouverture de la vanne.

En effet, un lien peut être trouvé entre le régime moteur où s'ouvre la vanne de surpression et la température d'huile correspondante. Il est donc possible de suivre l'évolution de ce lien pour qu'en cas de dérive, des actions de maintenance soient lancées en avance de phase. Le lien entre régime moteur et ouverture de la vanne de surpression dépend du circuit d'huile. L'identification de la relation entre ces deux grandeurs est donc à effectuer au cas par cas.

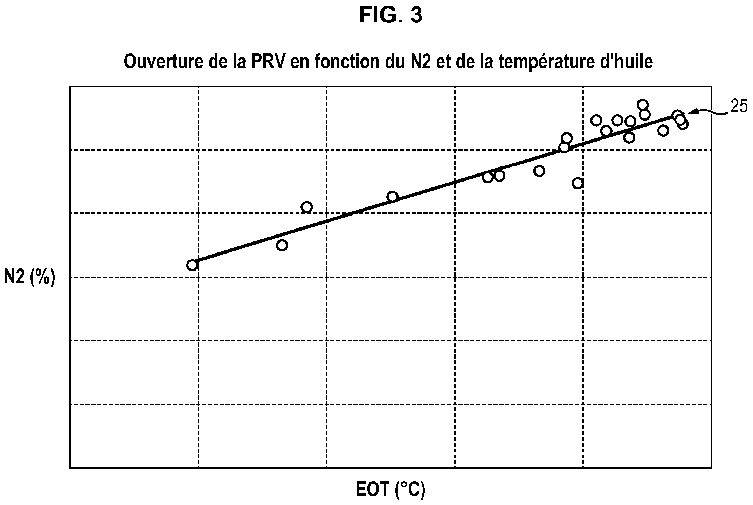

Une telle relation 25 est illustrée par la **figure 3** qui représente l'ouverture de la vanne de surpression en fonction du régime moteur (N2) et de la température d'huile (EOT).

Ainsi, si le régime moteur et/ou la température d'huile où s'ouvre la vanne de surpression est éloignée des conditions nominales de régime moteur et de température d'huile où la vanne de surpression doit normalement s'ouvrir, le module 10 de surveillance peur signaler un comportement à surveiller de ladite vanne. Dans le cas contraire, la vanne de surpression est signalée comme ayant un comportement sain.

Avantageusement, le module 10 de surveillance peut également comprendre un compteur d'usage de la vanne de surpression sauvegardant le nombre de cycles d'ouvertures et de fermetures détecté pour anticiper la maintenance des équipements ayant effectués beaucoup de cycles.

Il est connu des solutions réalisées via des compteurs d'endommagement qui comptent le nombre de cycles effectués par ces vannes (nombre d'ouverture et de fermeture). Ces compteurs permettent donc de connaitre l'état statistique de ces actionneurs (nombre d'ouverture et de fermeture théoriquement réalisées) sans s'intéresser à l'état réel du clapet à la différence du procédé proposé.

En effet, ces compteurs ne vérifient absolument pas que la fonction qu'est censée opérer l'actionneur est bien réalisée, mais se basent sur les seuils « idéaux » auxquels l'actionneur est censé se fermer.

Le procédé et le module de surveillance proposés permettent donc la surveillance de vanne, par exemple de type clapet by-pass de décharge dans le circuit d'huile d'un turboréacteur d'un point de fonctionnel en s'assurant que le rôle demandé à la vanne est toujours bien effectué. Ainsi, la surveillance décrite ici permet de suivre l'état de la vanne selon deux aspects :
- une surveillance fonctionnelle qui permet de s'assurer que la fonction est toujours réalisée et qu'elle ne dérive pas vis-à-vis des spécifications attendues (temps d'ouverture et de fermeture, valeurs de pression minimale et maximale d'ouverture) ; et
- un compteur d'usage qui compte le nombre de cycles d'ouvertures et de fermetures réellement effectués par l'équipement.

Une des difficultés de réalisation du procédé et du module de surveillance proposés est de déterminer une signature notable de l'ouverture de la vanne dans les acquisitions disponibles.

En effet, cette vanne s'active rarement et les variations de pression d'huile sont nombreuses ce qui pourrait conduire à des fausses détections d'ouverture de vanne de surpression.

De plus l'actionnement de cette vanne est rare, la construction d'un indicateur de surveillance de cette vanne a donc été complexifiée par le manque de données disponibles ce qui impose une méthode de détection qui soit robuste.

En outre, les capteurs disponibles sur le circuit d'huile ne sont pas situés à proximité de la vanne de surpression, les mesures qu'ils retournent ne sont donc pas directement transposables aux grandeurs physiques rencontrées à proximité de l'actionneur. Il faut donc une manière robuste de détecter les variations de comportement de cet actionneur pour ne pas avoir de trop nombreuses fausses détections.

Avantageusement, le procédé proposé permet d'avoir un indicateur de l'état de la vanne sans avoir besoin de monter un capteur signalant l'état ouvert ou fermé de la vanne de surpression permettant un gain de poids et minimisant le nombre de connecteurs au niveau du calculateur.

## Revendications

1. Procédé de surveillance de l'état de fonctionnement d'une vanne de surpression de turbomachine, la turbomachine comprenant un circuit d'huile, au moins un capteur de pression d'huile dans le circuit d'huile, un capteur de température de l'huile dans le circuit d'huile, ladite vanne de surpression étant configurée pour limiter les pressions d'huile maximales dans le circuit d'huile et s'ouvrir si la température de l'huile est inférieure à une température seuil de l'huile, et le procédé comprenant les étapes suivantes :
- (E2) détermination d'un indicateur d'ouverture ou de fermeture de la vanne de surpression à partir de l'évolution temporelle de la pression d'huile ;
- (E3) détermination d'un état de fonctionnement de la vanne en fonction d'une température d'huile mesurée par le capteur d'huile, d'une température seuil d'huile et de l'indicateur d'ouverture ou de fermeture de la vanne de surpression déterminé.

2. Procédé de surveillance de l'état de fonctionnement d'une vanne de surpression de turbomachine selon la revendication précédente dans lequel l'étape (E2) de détermination d'un indicateur d'ouverture ou de fermeture de la vanne de surpression est effectuée en fonction de la dérivée ou de la dérivée seconde de la pression d'huile en fonction du temps.

3. Procédé de surveillance de l'état de fonctionnement d'une vanne de surpression de turbomachine selon la revendication 2 dans lequel l'étape (E2) de détermination d'un indicateur d'ouverture ou de fermeture de la vanne de surpression effectuée en fonction de la dérivée de la pression d'huile en fonction du temps, comporte également la :
- détermination d'un indicateur d'ouverture de la vanne de surpression si une valeur de la dérivée est inférieure à une première valeur seuil (S1), et la
- détermination d'un indicateur de fermeture la vanne de surpression si une valeur de la dérivée est supérieure à une seconde valeur seuil (S2).

4. Procédé de surveillance de l'état de fonctionnement d'une vanne de surpression de turbomachine selon la revendication 2 dans lequel l'étape (E2) de détermination d'un indicateur d'ouverture ou de fermeture de la vanne de surpression est effectuée en fonction de la dérivée seconde de la pression d'huile en fonction du temps, ladite étape comporte également la :
- détermination d'un indicateur d'ouverture de la vanne de surpression si une valeur de la dérivée seconde est inférieure à une première valeur seuil (S3), et supérieure à une seconde valeur seuil (S4), supérieure à la première valeur, et la
- détermination d'un indicateur de fermeture de la vanne de surpression si une valeur de la dérivée seconde est inférieure à la première valeur seuil (S3), et supérieure à une seconde valeur seuil (S4).

5. Procédé de surveillance de l'état de fonctionnement d'une vanne de surpression de turbomachine selon l'une des revendications précédentes, dans lequel la vanne de surpression est configurée pour limiter les pressions d'huile maximales dans le circuit d'huile de la turbomachine.

6. Procédé de surveillance de l'état de fonctionnement d'une vanne de surpression de turbomachine selon l'une des revendications précédentes dans lequel l'étape de détermination d'un état de fonctionnement de la vanne de surpression comporte également les sous-étapes suivantes :
- (E31) détermination d'un état de fonctionnement anormal de la vanne de surpression si un indicateur d'ouverture a été déterminé et si la température du fluide à un instant correspondant à l'indicateur d'ouverture est supérieure à un seuil de température déterminé.

7. Procédé de surveillance de l'état de fonctionnement d'une vanne de surpression de turbomachine selon l'une des revendications précédentes dans lequel la turbomachine comprend un capteur de vitesse de régime moteur, et dans lequel le procédé comprend en outre une étape (E1) initiale d'extraction d'une phase de démarrage du moteur en fonction du régime moteur, l'étape de détermination d'un indicateur d'ouverture ou de fermeture de la vanne de surpression étant mise en oeuvre durant ladite phase de démarrage moteur.

8. Procédé de surveillance de l'état de fonctionnement d'une vanne de surpression de turbomachine selon la revendication 7 dans lequel l'étape de détermination d'un état de fonctionnement de la vanne de surpression comporte également les sous-étapes suivantes :
- (E32) détermination d'un état de fonctionnement anormal de la vanne de surpression si durant la phase de démarrage, la température est supérieure à un seuil de température déterminé.

9. Procédé de surveillance de l'état de fonctionnement d'une vanne de surpression de turbomachine selon l'une des revendications 7 à 8 dans lequel l'étape de détermination d'un état de fonctionnement de la vanne de surpression comporte également les sous-étapes suivantes :
- (E33) détection d'une dérive d'une ouverture de la vanne de surpression en fonction du régime moteur et température à l'instant d'ouverture, ladite dérive étant représentative de prémices de panne de ladite vanne.

10. Procédé de surveillance de l'état de fonctionnement d'un clapet de turbomachine selon la revendication 9 dans lequel l'étape (E33) de détection d'une dérive est effectuée, en référence à une courbe nominale fonction du régime moteur et de la température à des instants d'ouverture de la vanne de surpression.

11. Procédé de surveillance de l'état de fonctionnement d'une vanne de surpression de turbomachine selon l'une des revendications précédentes dans lequel le nombre de cycles d'ouverture et de fermeture de la vanne de surpression est sauvegardé.

12. Produit programme d'ordinateur comprenant des instructions de code pour l'exécution d'un procédé de surveillance de l'état de fonctionnement d'une vanne de surpression de turbomachine selon l'une des revendications 1 à 11.

## Patentansprüche

1. Verfahren zum Überwachen des Betriebszustandes eines Überdruckventils einer Turbomaschine, wobei die Turbomaschine einen Ölkreislauf, mindestens einen Öldrucksensor im Ölkreislauf, einen Öltemperatursensor im Ölkreislauf umfasst, wobei das Überdruckventil so konfiguriert ist, dass es die maximalen Öldrücke im Ölkreislauf begrenzt und sich öffnet, wenn die Öltemperatur des Öls niedriger als eine Ölschwellentemperatur ist, und das Verfahren die folgenden Schritte umfasst:
- (E2) Bestimmen eines Indikators für das Öffnen oder Schließen des Überdruckventils aus der zeitlichen Entwicklung des Öldrucks;
- (E3) Bestimmen eines Betriebszustands des Ventils in Abhängigkeit von einer durch den Ölsensor gemessenen Öltemperatur, einer Ölschwellentemperatur und dem bestimmten Indikator für das Öffnen oder Schließen des Überdrucks.

2. Verfahren zum Überwachen des Betriebszustands eines Überdruckventils einer Turbomaschine nach dem vorhergehenden Anspruch, wobei der Schritt (E2) des Bestimmens eines Indikators für das Öffnen oder Schließen des Überdruckventils in Abhängigkeit von der Ableitung oder der zweiten Ableitung des Öldrucks als Funktion der Zeit durchgeführt wird.

3. Verfahren zum Überwachen des Betriebszustands eines Überdruckventils einer Turbomaschine nach Anspruch 2, wobei der Schritt (E2) des Bestimmens eines Indikators für das Öffnen oder Schließen des Überdruckventils, der in Abhängigkeit von der Ableitung des Öldrucks als Funktion der Zeit durchgeführt wird, auch Folgendes umfasst:
- Bestimmen eines Indikators für das Öffnen des Überdruckventils, wenn ein Wert der Ableitung kleiner als ein erster Schwellenwert (S1) ist, und das
- Bestimmen eines Indikators für das Schließen des Überdruckventils, wenn ein Wert der Ableitung größer als ein zweiter Schwellenwert (S2) ist.

4. Verfahren zum Überwachen des Betriebszustands eines Überdruckventils einer Turbomaschine nach Anspruch 2, wobei der Schritt (E2) des Bestimmens eines Indikators für das Öffnen oder Schließen des Überdruckventils in Abhängigkeit von der zweiten Ableitung des Öldrucks als Funktion der Zeit durchgeführt wird, wobei der Schritt auch Folgendes umfasst:
- Bestimmen eines Indikators für das Öffnen des Überdruckventils, wenn ein Wert der zweiten Ableitung kleiner als ein erster Schwellenwert (S3), größer als ein zweiter Schwellenwert (S4) und größer als der erste Wert ist, und das
- Bestimmen eines Indikators zum Schließen des Überdruckventils, wenn ein Wert der zweiten Ableitung kleiner als der erste Schwellenwert (S3) und größer als ein zweiter Schwellenwert (S4) ist.

5. Verfahren zum Überwachen des Betriebszustands eines Überdruckventils einer Turbomaschine nach einem der vorhergehenden Ansprüche, wobei das Überdruckventil so konfiguriert ist, dass es die maximalen Öldrücke im Ölkreislauf der Turbomaschine begrenzt.

6. Verfahren zum Überwachen des Betriebszustands eines Überdruckventils einer Turbomaschine nach einem der vorhergehenden Ansprüche, wobei der Schritt des Bestimmens eines Betriebszustands des Überdruckventils auch die folgenden Teilschritte umfasst:
- (E31) Bestimmen eines anormalen Betriebszustands des Überdruckventils, wenn ein Indikator zum Öffnen bestimmt wurde und wenn die Öltemperatur zu einem Zeitpunkt, der dem Indikator zum Öffnen entspricht, größer als ein bestimmter Temperaturschwellenwert ist.

7. Verfahren zum Überwachen des Betriebszustands eines Überdruckventils einer Turbomaschine nach einem der vorhergehenden Ansprüche, wobei die Turbomaschine einen Drehzahlsensor für die Motorleistung umfasst und wobei das Verfahren ferner einen anfänglichen Schritt (E1) des Extrahierens einer Motoranlaufphase in Abhängigkeit von der Motordrehzahl umfasst, wobei der Schritt des Bestimmens eines Indikators für das Öffnen oder Schließen des Überdruckventils während der Motoranlaufphase durchgeführt wird.

8. Verfahren zum Überwachen des Betriebszustands eines Überdruckventils einer Turbomaschine nach Anspruch 7, wobei der Schritt des Bestimmens eines Betriebszustands des Überdruckventils auch die folgenden Teilschritte umfasst:
- (E32) Bestimmen eines anormalen Betriebszustands des Überdruckventils, wenn während der Anlaufphase die Temperatur größer als ein bestimmter Temperaturschwellenwert ist.

9. Verfahren zum Überwachen des Betriebszustands eines Überdruckventils einer Turbomaschine nach einem der Ansprüche 7 bis 8, wobei der Schritt des Bestimmens eines Betriebszustands des Überdruckventils auch die folgenden Teilschritte umfasst:
- (E33) Erfassen einer Drift einer Öffnung des Überdruckventils in Abhängigkeit von der Motordrehzahl und der Temperatur zum Zeitpunkt des Öffnens, wobei die Drift repräsentativ für die ersten Anzeichen eines Ausfalls des Ventils ist.

10. Verfahren zum Überwachen des Betriebszustands eines Turbomaschinenventils nach Anspruch 9, wobei der Schritt (E33) des Erfassens einer Drift anhand einer Sollkurve in Abhängigkeit von der Motordrehzahl und der Temperatur zum Zeitpunkt des Öffnens des Überdruckventils durchgeführt wird.

11. Verfahren zum Überwachen des Betriebszustandes eines Überdruckventils einer Turbomaschine nach einem der vorhergehenden Ansprüche, wobei die Anzahl der Öffnungs- und Schließzyklen des Überdruckventils gespeichert wird.

12. Computerprogrammprodukt, umfassend Codeanweisungen zum Durchführen eines Verfahrens zum Überwachen des Betriebszustands eines Überdruckventils einer Turbomaschine nach einem der Ansprüche 1 bis 11.

## Claims

1. Method of monitoring the operating state of a turbomachine pressure relief valve, the turbomachine comprising a oil circuit, at least one oil pressure sensor in the oil circuit, a oil temperature sensor in the oil circuit, said pressure relief valve being configured to limit the maximum oil pressures in the oil circuit and to open if the temperature of the oil is below a threshold oil temperature, and the method comprising the following steps:
- (E2) determining an indicator for opening or closing the excess pressure valve on the basis of the temporal evolution of the oil pressure;
- (E3) determining an operating state of the valve as a function of an oil temperature measured by the oil sensor, an oil threshold temperature and of the determined opening or closing indicator of the pressure relief valve.

2. Method of monitoring the operating state of a turbomachine pressure relief valve according to the preceding claim, in which the step (E2) of determining an indicator of opening or closing of the pressure relief valve is carried out as a function of the derivative or of the second derivative of the oil pressure as a function of time.

3. Method for monitoring the operating state of a turbomachine pressure relief valve according to claim 2 wherein the step (E2) of determining an indicator of opening or closing of the pressure relief valve carried out as a function of the derivative of the oil pressure as a function of time, also includes the:
- determination of an indicator of opening of the pressure relief valve if a value of the derivative is smaller than a first threshold value (S1), and the
- determination of an indicator of closing of the pressure relief valve if a value of the derivative is greater than a second threshold value (S2).

4. Method of monitoring the operating state of a turbomachine pressure relief valve according to claim 2, in which the step (E2) of determining an indicator of opening or closing of the pressure relief valve is carried out as a function of the second derivative of the pressure of oil as a function of time, said step also comprising the:
- determination of an indicator of opening of the pressure relief valve if a value of the second derivative is smaller than a first threshold value (S3), and greater than a second threshold value (S4), greater than the first value, and the
- determination of an indicator of closing of the pressure relief valve if a value of the second derivative is smaller than the first threshold value (S3), and greater than a second threshold value (S4).

5. Method of monitoring the operating state of a turbomachine pressure relief valve according to one of the preceding claims, in which the pressure relief valve is configured to limit the maximum oil pressures in the oil circuit of the turbomachine.

6. A method of monitoring the operating state of a turbomachine pressure relief valve according to any of the preceding claims in which the step of determining an operating state of the pressure relief valve also comprises the following sub-steps:
- (E31) determination of an abnormal operating state of the pressure relief valve if an opening indicator has been determined and if the oil temperature at an instant corresponding to the opening indicator is greater than a determined temperature threshold.

7. Method of monitoring the operating state of a turbomachine pressure relief valve according to one of the preceding claims, in which the turbomachine comprises an engine speed sensor, and wherein the method further comprises an initial step (E1) of extracting an engine start-up phase as a function of the engine speed, the step of determining an indicator of opening or closing of the pressure relief valve being implemented during the said engine start-up phase.

8. A method of monitoring the operating state of a turbomachine pressure relief valve according to claim 7 in which the step of determining an operating state of the pressure relief valve also comprises the following sub-steps:
- (E32) determining an abnormal operating state of the pressure relief valve if, during the start-up phase, the temperature is higher than a specified temperature threshold.

9. Method of monitoring the operating state of a turbomachine pressure relief valve according to one of claims 7 to 8, wherein the step of determining an operating state of the pressure relief valve also comprises the following sub-steps:
- (E33) detection of a drift in the opening of the pressure relief valve as a function of the engine speed and temperature at the time of opening, said drift being representative of the first signs of failure of said valve.

10. Method of monitoring the operating state of a turbomachine valve according to claim 9, wherein the step (E33) of detecting a drift is carried out with reference to a nominal curve which is a function of the engine speed and the temperature at times when the pressure relief valve is open.

11. Method of monitoring the operating state of a turbomachine pressure relief valve according to one of the preceding claims, wherein the number of opening and closing cycles of the pressure relief valve is stored.

12. Computer program product comprising code instructions for executing a method of monitoring the operating state of a turbomachine pressure relief valve according to one of claims 1 to 11.
